# EUROPEAN PATENT SPECIFICATION

(11) **EP 3 872 548 B1**
(45) Date of publication and mention of the grant of the patent: **04.09.2024**
(21) Application number: 20820751.4
(22) Date of filing: 16.09.2020
(51) Int. Cl.: G02B 6/44

(54) **HIGH-AND-LOW-TEMPERATURE-RESISTANT REMOTE OPTICAL CABLE AND MANUFACTURING PROCESS THEREFOR**
HOCH- UND TIEFTEMPERATURBESTÄNDIGES FERNFASERKABEL UND HERSTELLUNGSVERFAHREN DAFÜR
CÂBLE OPTIQUE DISTANT RÉSISTANT AUX TEMPÉRATURES ÉLEVÉES ET BASSES ET SON PROCÉDÉ DE FABRICATION

(30) Priority: 28.12.2019 CN 201911383880
(43) Date of publication of application: 01.09.2021
(73) Proprietor: Hengtong Optic-Electric Co., Ltd., Suzhou, Jiangsu 215000 (CN)
(72) Inventor: XU, Kai, Suzhou, Jiangsu 215000 (CN); ZHAN, Xuelong, Suzhou, Jiangsu 215000 (CN); ZHANG, Yu, Suzhou, Jiangsu 215000 (CN); XIA, Wenkui, Suzhou, Jiangsu 215000 (CN); ZHANG, Wenmei, Suzhou, Jiangsu 215000 (CN); YANG, Xu, Suzhou, Jiangsu 215000 (CN)
(74) Representative: RGTH
(86) International application number: PCT/CN2020/115553
(87) International publication number: WO 2021/128970

(56) References cited:
- EP-B1- 0 314 991
- EP-B1- 1 324 091
- WO-A1-2017/061196
- CN-A- 1 536 382
- CN-A- 104 834 069
- CN-A- 106 952 695
- CN-A- 109 031 567
- CN-A- 110 045 475
- CN-A- 110 908 056
- CN-U- 204 882 973
- US-A- 4 743 085
- US-A- 5 495 547
- US-A1- 2004 238 979

## Description

### FIELD OF THE INVENTION

The present invention relates to the field of optical fiber cable manufacturing technology, and more particularly to a high and low temperature resistant remote optical cable and a process for manufacturing the same.

### DESCRIPTION OF THE RELATED ART

With the rapid development of communication technology, a conventional cable communication technology is gradually replaced by an optical fiber communication technology due to its own limitations. A physical channel for transmission is also correspondingly changed from an electric cable into an optical fiber cable. Optical fiber remote has emerged along with remote radio unit and an optical fiber repeater technology. The excellent transmission characteristic of an optical fiber is used to extend the coverage of a baseband signal and a radio frequency signal, to facilitate the site selection of a base station and the installation of an antenna feeder and utilize carrier frequency resources appropriately. The optical fiber remote technology develops relatively fast in recent years. A remote optical cable is used between a radio remote unit (RRU) and a baseband processing unit (BBU) to implement data transmission between the RRU and the BBU.

With the continuous development of mobile communication networks, conventional 2-core and 4-core remote optical cables can no longer satisfy -multi-scenario universal requirements. In the era of 5G networks that are about to be fully deployed, 5G communication base stations will be densely deployed. Therefore, a fronthaul network becomes a critical path for connecting base stations (active antenna units, AAUs). According to market research, currently, a fronthaul path of one 5G base station requires 6 to 24 core optical fibers, and it is considered that one BBU/distributed unit (DU) is connected to 3 to 12 AAUs. As the quantity of AAUs increases, the quantity of optical fiber cables to be used increases accordingly. In consideration of the problems such as the costs caused by constructions for many times and the construction is difficult in remote area or severe environments, a large-core-number, bundle-type, environmentally-resistant optical fiber cable is more suitable for use.

Especially, when an optical fiber cable is in a low temperature condition, a sheath material has relatively high shrinkage performance, but an optical fiber does not shrink. As a result, the optical fiber has an excessively large excess length in the optical fiber cable and tends to bend and fold in the optical fiber cable, causing an increase in additional attenuation in the optical fiber and impact to the transmission performance of the optical fiber.

US 4 743 085 A mentions an optical fiber cable, which comprises a core wrapped by a tubular member, an inner jacket and an intermediate jacket both made of a plastic material and surrounding the tubular member in sequence, and a plurality of strength member, which may be steel wires or glass rods, being partially embedded in each jacket. The strength members wrapped helically about bedding layers, while the bedding layers are added between the tubular member and the inner jacket, and between the inner jacket and the intermediate jacket.

US 2004/238979 A1 discloses a method of manufacturing an optical cable, which can prevent the degradation of characteristics of the optical cable due to generation of voids caused by gasification of a fiber reinforced plastic (FRP), wherein the optical fiber cable and a tension member made of a FRP are coated by extruding a thermoplastic resin around them.

CN 109 031 567 A discloses an optical fiber cable comprising a cable core, an inner sheath layer covering the outer side of the cable core, and an outer sheath layer covering the outer side of the inner sheath layer, wherein six first non-metallic strengthening cores are embedded into the inner sheath layer, and distributed on a concentric circle with the center of the cable core.

### SUMMARY OF THE INVENTION

The technical problem to be resolved by the present invention is to provide a high and low temperature resistant remote optical cable and a process of manufacturing the same, the optical cable is applicable to transmission scenarios of indoor and outdoor communication base stations, can be used in high and low temperature conditions and has adequate tensile resistance and crush resistance characteristics.

To solve the foregoing technical problem, the present invention provides a high and low temperature resistant remote optical cable as defined in claim 1.

In a preferred embodiment of the present invention, the cable core is a bundle unit formed by performing bundle coating on 2 to 24 fiber units.

In a preferred embodiment of the present invention, the fiber unit is a colored fiber or a tight-buffered fiber.

According to the present invention, the fiber unit has an excess length of -0.2% to 0.

In a preferred embodiment of the present invention, the inner reinforcing layer and the outer reinforcing layer are both formed by directly burying a plurality of aramid fibers.

In a preferred embodiment of the present invention, the outer sheath is tube-extruded to cover the outer side of the inner sheath, and a gap is provided between the inner sheath and the outer sheath, wherein the gap being configured to be filled by the outer reinforcing layer.

According to the present invention, the inner sheath and the outer sheath are both made of a low smoke zero halogen (LSZH) flame-retardant sheathing material.

To resolve the foregoing technical problem, the present invention further provides a process of manufacturing a high and low temperature resistant remote optical cable as defined in claim 6.

In a preferred embodiment of the present invention, the fiber unit in step S1 is a colored fiber obtained by coloring a bare fiber or a tight-buffered fiber obtained by extruding a bare fiber.

As compared with the prior art, the invention has the following beneficial effects:
1. In the high and low temperature resistant remote optical cable of the present invention, nonmetal reinforcing members with a coating layer are inserted in an inner sheath and an outer sheath. The coating layer can improve the bonding strength between the nonmetal reinforcing members and the inner sheath and outer sheath, so that the shrinkage of the inner sheath and outer sheath in a low temperature condition can be suppressed, thereby improving the low temperature resistance performance of an optical fiber cable. An LSZH flame-retardant sheathing material is used to improve the high temperature resistance performance of the optical fiber cable. In addition, the nonmetal reinforcing members are disposed to improve the crush resistance capability and the tensile resistance capability of the optical fiber cable.
2. In the present invention, the positions of inner-layer nonmetal reinforcing members inserted in the inner sheath are corresponding to the positions of outer-layer nonmetal reinforcing members inserted in the outer sheath, which facilitates the bending of the optical fiber cable during blocking or construction.
3. In the process of manufacturing a high and low temperature resistant remote optical cable in the present invention, bundle resin is applied outside a plurality of fiber units for bonding into a bundle unit, so that a high-density use requirement can be satisfied, the quantity of the fiber units can be increased, and the duty cycle of the fiber unit in the optical fiber cable can be increased. The excess length of the fiber unit is controlled to be a negative excess length of -0.2% to 0. When the optical fiber cable is in a low-temperature environment and the inner sheath and the sheath shrink, the fiber units are prevented from accumulating in a cable core to avoid additional attenuation loss. In addition, to ensure that the positions of the inner-layer nonmetal reinforcing members inserted in the inner sheath are corresponding to the positions of the outer-layer nonmetal reinforcing members inserted in the outer sheath , an adjustment-free eccentric die is used to fix the positions of the inner-layer nonmetal reinforcing members, to prevent the reinforcing members from shaking during insertion.

### BRIEF DESCRIPTION OF THE DRAWINGS

FIG. 1 is a schematic diagram of a high and low temperature resistant remote optical cable according to the present invention;
FIG. 2 is a flowchart showing a process of manufacturing a high and low temperature resistant remote optical cable according to the present invention; and
FIG. 3 shows the steps of a process of manufacturing a high and low temperature resistant remote optical cable according to the present invention.

Reference numerals in the drawings: 1, cable core; 2, fiber unit; 3, bundle unit; 4, inner reinforcing layer; 5,inner sheath; 6, inner-layer nonmetal reinforcing member; 7, outer reinforcing layer; 8, outer sheath; 9, outer-layer nonmetal reinforcing member; and 10, coating layer.

### DETAILED DESCRIPTION OF THE PREFERRED EMBODIMENTS

The present invention is further described below with reference to the accompanying drawings and specific embodiments, to enable a person skilled in the art to better understand and implement the present invention. However, the embodiments are not intended to limit the present invention.

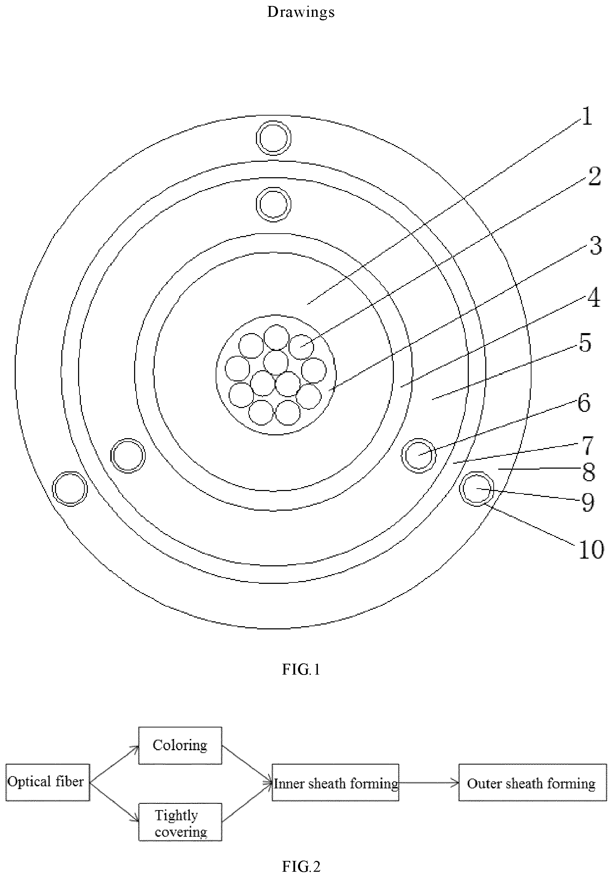

Referring to FIG. 1, an embodiment of a high and low temperature resistant remote optical cable of the present invention includes a cable core 1, an inner reinforcing layer 4, an inner sheath 5, an outer reinforcing layer 7 and an outer sheath 8 that sequentially cover the cable core 1. Three inner-layer nonmetal reinforcing members 6 are inserted in the inner sheath 5. The inner-layer nonmetal reinforcing members 6 are uniformly distributed in the inner sheath 5 in the circumferential direction. In this embodiment, the three inner-layer nonmetal reinforcing members 6 can be connected to form a regular triangle structure. The same numbers of outer-layer nonmetal reinforcing members 9 as the inner-layer nonmetal reinforcing members 6 are inserted in the outer sheath 8. The outer-layer nonmetal reinforcing members 9 are disposed on extension lines of the connection lines between the cable core 1 and the inner-layer nonmetal reinforcing members 6. Coating layers 10 are provided on the outer surfaces of the inner-layer nonmetal reinforcing members 6 and the outer-layer nonmetal reinforcing members 9. In a process of covering the outer sheath 8 or the inner sheath 5, a high-temperature sheathing material melts the coating layers 10. The coating layers 10 can improve the bonding strength between the nonmetal reinforcing members and the inner sheath 5 and the outer sheath 8, so that the shrinkage of the inner sheath 5 and the outer sheath 8 in a low temperature condition can be suppressed, thereby improving the low temperature resistance performance of an optical fiber cable. According to the claimed invention, the inner sheath 5 and the outer sheath 8 are both made of an LSZH flame-retardant sheathing material. The LSZH flame-retardant sheathing material has advantages such as high flame retardancy, a low shrinkage rate, low temperature resistance, high temperature resistance, corrosion resistance, sunlight resistance, aging resistance, crack resistance, environmental friendliness, color uniformity, appropriate softness and hardness, easy for processing, bending resistance, thin wall processing, high strength, rodent resistance, and low costs and prices, and is suitable for use in high and low temperature and environmentally complicated conditions.

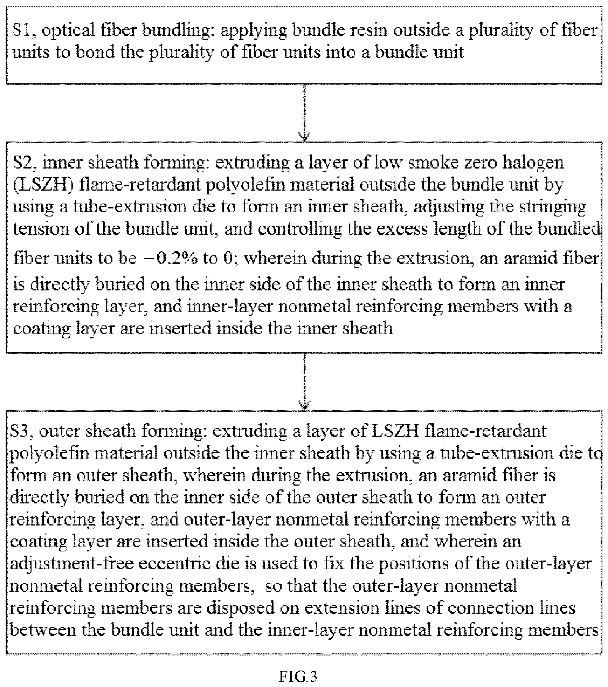

Referring to FIG. 2 and FIG. 3, an embodiment of a process of manufacturing a high and low temperature resistant remote optical cable in this embodiment includes the following steps:
S1. Optical fiber bundling: bundle resin is applied outside a plurality of fiber units 2 to bond the plurality of fiber units into a bundle unit 3.
S2. inner sheath forming: a tube-extrusion die is used to extrude a layer of LSZH flame-retardant polyolefin material outside the bundle unit 3 to form an inner sheath 5, the stringing tension of the bundle unit is adjusted, and the excess length of the bundled fiber units 2 is controlled to be -0.2% to 0; and wherein during the extrusion, an aramid fiber is directly buried on the inner side of the inner sheath 5 to form an inner reinforcing layer 4, and inner-layer nonmetal reinforcing members 6 with a coating layer 10 are inserted inside the inner sheath 5.
S3. outer sheathing forming: a tube-extrusion die is used to extrude a layer of LSZH flame-retardant polyolefin material outside the inner sheath 5 to form an outer sheath 8, wherein during the extrusion, an aramid fiber is directly buried on the inner side of the outer sheath 8 to form an outer reinforcing layer 7, and outer-layer nonmetal reinforcing members 9 with a coating layer 10 are inserted inside the outer sheath 8, and wherein an adjustment-free eccentric die is used to fix the positions of the outer-layer nonmetal reinforcing members 9, so that the outer-layer nonmetal reinforcing members 9 are disposed on extension lines of the connection lines between the bundle unit 3 and the inner-layer nonmetal reinforcing members 6.

In this embodiment, the three outer-layer nonmetal reinforcing members 9 can also be connected to form a regular triangle structure. The two regular triangle structures have the same facing angle, making it convenient for an optical fiber cable to bend during blocking or construction. In a process of blocking the optical fiber cable, the optical fiber cable needs to be wound around a wooden drum. If the positions of the inner-layer nonmetal reinforcing members 6 are different from those of the outer-layer nonmetal reinforcing members 9, the optical fiber cable is subject to different internal stress, and the optical fiber cable cannot conveniently bend in one direction and as a result the optical fiber cable cannot be wound around the wooden drum. To ensure that the outer-layer nonmetal reinforcing members 9 are disposed on the extension lines of the connection lines between the bundle unit 3 and the inner-layer nonmetal reinforcing members 6, in the outer sheath forming process of this embodiment, an adjustment-free eccentric die is used, so that the positions of the outer-layer nonmetal reinforcing members 9 can be fixed.

Specifically, the cable core 1 is the bundle unit 3 formed by performing bundle coating on 2 to 24 fiber units 2. The bundle unit 3 bundles the fiber units 2, so that a high-density use requirement can be satisfied, the quantity of the fiber units 2 can be increased, and the duty cycle of the fiber unit 2 in the optical fiber cable can be increased. In addition, a bundle layer in the bundle unit 3 can also protect the fiber units 2 to some extent.

Specifically, the fiber unit 2 is a colored fiber or a tight-buffered fiber. The colored fiber is obtained by applying a layer of colored ink on the outer side of a bare fiber. The plurality of fiber units 2 are colored according to the standard color codes (blue, orange, green, brown, gray, white, red, black, yellow, purple, pink, and cyan) of optical fibers. The tight-buffered fiber may provide one more layer of protection for the optical fiber. A tight-buffered material may be an LSZH or nylon material.

According to the claimed invention, the excess length of the fiber unit 2 is a negative excess length of -0.2% to 0. Because the fiber unit 2 has a particular extensibility, in a process of covering the inner sheath 5 outside the fiber units 2, the stringing tension of the fiber unit 2 is adjusted, to enable the fiber unit 2 to have a zero excess length or a slight negative excess length in the inner sheath 5. In this way, when the optical fiber cable is in a low temperature environment and the inner sheath 5 and the outer sheath 8 shrink, the fiber unit 2 may then have a positive excess length relative to the inner sheath 5 and the outer sheath 8, to prevent the fiber units 2 from accumulating in the cable core 1 to avoid additional attenuation loss.

Because the remote optical cable has a relatively long laying distance, the thickness of the sheath needs to be minimized to reduce the outer diameter and weight of the optical fiber cable. Specifically, the wall thicknesses of the inner sheath 5 at two sides of the inner-layer nonmetal reinforcing members and the wall thicknesses of the outer sheath 8 at two sides of the outer-layer nonmetal reinforcing members are all less than 0.4 mm. In addition, the surface of the sheath needs to be prevented from dents or the inner layer needs to be prevented from fracturing.

Specifically, the inner reinforcing layer 4 and the outer reinforcing layer 7 are both formed by directly burying a plurality of aramid fibers. The aramid fibers have the performance of low density, a high tensile modulus, high fracture strength, and a low fracture extension rate, and further have relatively high corrosion resistance performance, no electrical conductivity, relatively high resistance performance against chemicals other than strong acids and strong alkali. The inner reinforcing layer 4 and the outer reinforcing layer 7 formed by the aramid fibers further enhance the tensile resistance performance of the optical fiber cable.

Specifically, the sheath 8 is tube-extruded to cover the outer side of the inner sheath 5. A gap is provided between the outer sheath 8 and the inner sheath 5. The tube-extrusion die is used in place of an extrusion die, to prevent the outer sheath 8 to tightly cover the outer side of the inner sheath 5. The gap is provided, so that in one aspect, during the extrusion of the outer sheath 8, the aramid fibers can be prevented from being extruded to avoid the accumulation of the aramid fibers. In another aspect, the outer sheath 8 and the inner sheath 5 are not bonded together, and do not shrink synchronously at a low temperature.

Specifically, the inner sheath 5 is tube-extruded to cover the outer side of the cable core 1. The tube-extrusion die is used in place of an extrusion die, to prevent the inner sheath 5 from pressing the cable core 1.

The foregoing embodiments are merely preferred embodiments used to fully describe the present invention, and the protection scope of the present invention is not limited thereto. The protection scope of the present invention is as defined in the claims.

## Claims

1. A high and low temperature resistant remote optical cable, comprising a cable core (1), an inner reinforcing layer (4), an inner sheath (5), an outer reinforcing layer (7) and an outer sheath (8) that sequentially cover the cable core (1), wherein at least three inner-layer nonmetal reinforcing members (6) are inserted in the inner sheath (5), the inner-layer nonmetal reinforcing members (6) are uniformly distributed in the inner sheath (5) in the circumferential direction, the same number of outer-layer nonmetal reinforcing members (9) as the inner-layer nonmetal reinforcing members (6) are inserted in the outer sheath (8),
wherein coating layers (10) are disposed on both the outer surfaces of the inner-layer nonmetal reinforcing members (6) and the outer-layer nonmetal reinforcing members (9), and
wherein the cable core (1) is a bundle unit (3) formed by performing bundle coating on a plurality of fiber units (2),
wherein the outer-layer nonmetal reinforcing members (9) are disposed on extending lines of connection lines between the cable core (1) and the inner-layer nonmetal reinforcing members (6),
the inner sheath (5) and the outer sheath (8) are both made of a low smoke zero halogen, LSZH, flame-retardant sheathing material, and
the fiber units (2) have an excess length of -0.2% to 0.

2. The high and low temperature resistant remote optical cable according to claim 1, wherein the bundle coating is performed on 2 to 24 fiber units (2).

3. The high and low temperature resistant remote optical cable according to any one of claim 1 to 2, wherein the fiber unit (2) is a colored fiber or a tight buffered fiber.

4. The high and low temperature resistant remote optical cable according to any one of claim 1 to 3, wherein the inner reinforcing layer (4) and the outer reinforcing layer (7) are both formed by directly burying a plurality of aramid fibers.

5. The high and low temperature resistant remote optical cable according to any one of claim 1 to 4, wherein the outer sheath (8) is tube-extruded to cover an outer side of the inner sheath (5), and a gap is provided between the outer sheath (8) and the inner sheath (5), wherein the gap is filled by the outer reinforcing layer (7).

6. A process for manufacturing a high and low temperature resistant remote optical cable according to any one of claims 1 to 5, comprising the steps of:
(S 1) optical fiber bundling: applying bundle resin outside the plurality of fiber units (2) to bond the plurality of fiber units (2) into the bundle unit (3);
(S2) inner sheath (5) forming: extruding a layer of low smoke zero halogen, LSZH, flame-retardant polyolefin material outside the bundle unit (3) by using a tube-extrusion die to form the inner sheath (5), adjusting the stringing tension of the bundle unit (3), and controlling the excess length of the fiber units (2) to be -0.2% to 0; wherein during the extrusion, an aramid fiber is directly buried on the inner side of the inner sheath (5) to form the inner reinforcing layer (4), and the at least three inner-layer nonmetal reinforcing members (6) with the coating layer (10) are inserted inside the inner sheath (5); and
(S3) outer sheath (8) forming: extruding a layer of LSZH flame-retardant polyolefin material outside the inner sheath (5) by using a tube-extrusion die to form the outer sheath (8),
wherein during the extrusion, an aramid fiber is directly buried on the inner side of the outer sheath (8) to form the outer reinforcing layer (7), and the at least three outer-layer nonmetal reinforcing members (9) with the coating layer (10) are inserted inside the outer sheath (8), and
wherein an adjustment-free eccentric die is used to fix the positions of the outer-layer nonmetal reinforcing members (9), so that the outer-layer nonmetal reinforcing members (9) are disposed on the extending lines of connection lines between the bundle unit (3) and the inner-layer nonmetal reinforcing members (6).

7. The process of manufacturing a high and low temperature resistant remote optical cable according to claim 6, wherein in the step (S1) the fiber unit (2) is a colored fiber which is obtained by coloring a bare fiber or is a tight buffered fiber which is obtained by extruding a bare fiber.

## Patentansprüche

1. Hoch- und tieftemperaturbeständiges Glasfaserfernkabel, umfassend eine Kabelader (1), eine innere Verstärkungsschicht (4), einen inneren Mantel (5), eine äußere Verstärkungsschicht (7) und einen äußeren Mantel (8), die nacheinander die Kabelader (1) abdecken, wobei mindestens drei nichtmetallische Verstärkungselemente der inneren Schicht (6) in den inneren Mantel (5) eingefügt sind, die Verstärkungselemente der inneren Schicht (6) im inneren Mantel (5) in Umfangsrichtung gleichmäßig verteilt sind, im äußeren Mantel (8) die gleiche Anzahl von nichtmetallischen Verstärkungselementen der äußeren Schicht (9) wie die nichtmetallischen Verstärkungselemente der inneren Schicht- (6) eingesetzt sind,
wobei Beschichtungsschichten (10) sowohl auf den Außenflächen der nichtmetallischen Verstärkungselemente der inneren Schicht (6) als auch der nichtmetallischen Verstärkungselemente der äußeren Schicht (9) angeordnet sind, und
wobei die Kabelader (1) eine Bündeleinheit (3) ist, die durch die Durchführung einer Bündelbeschichtung an einer Vielzahl von Fasereinheiten (2) ausgebildet wird,
wobei
die nichtmetallischen Verstärkungselemente der äußeren Schicht (9) auf den Verlängerungslinien der Verbindungslinien zwischen der Kabelader (1) und den nichtmetallischen Verstärkungselementen der inneren Schicht (6) angeordnet sind,
der innere Mantel (5) und der äußere Mantel (8) bestehen beide aus einem raucharmen, halogenfreien (LSZH), flammhemmenden Mantelmaterial, und
die Fasereinheiten (2) weisen eine Überlänge von -0,2 % bis 0 auf.

2. Hoch- und tieftemperaturbeständiges Glasfaserfernkabel gemäß Anspruch 1, wobei das Bündelbeschichten auf 2 bis 24 Fasereinheiten (2) erfolgt.

3. Hoch- und tieftemperaturbeständiges Glasfaserfernkabel gemäß einem der Ansprüche 1 bis 2, wobei die Fasereinheit (2) eine farbige Faser oder eine eng gepufferte Faser ist.

4. Hoch- und tieftemperaturbeständiges Glasfaserfernkabel gemäß einem der Ansprüche 1 bis 3, wobei die innere Verstärkungsschicht (4) und die äußere Verstärkungsschicht (7) durch direktes Vergraben einer Vielzahl von Aramidfasern ausgebildet wird.

5. Hoch- und tieftemperaturbeständiges Glasfaserfernkabel gemäß einem der Ansprüche 1 bis 4, wobei der äußere Mantel (8) schlauchextrudiert ist, um eine Außenseite des inneren Mantels (5) abzudecken, und ein Spalt zwischen dem äußeren Mantel (8) und dem inneren Mantel (5) vorgesehen ist, wobei der Spalt durch die äußere Verstärkungsschicht (7) gefüllt ist.

6. Verfahren zum Herstellen eines hoch- und tieftemperaturbeständigen Glasfaserfernkabels gemäß einem der Ansprüche 1 bis 5, umfassend die folgenden Schritte:
(S1) Bündeln von Glasfasern: Auftragen von Bündelharz außerhalb der Vielzahl von Fasereinheiten (2), um die Vielzahl von Fasereinheiten (2) in der Bündeleinheit (3) zu verbinden;
(S2) Ausbilden eines inneren Mantels (5): Extrudieren einer Schicht aus raucharmem, halogenfreiem, flammhemmendem Polyolefinmaterial (LSZH) außerhalb der Bündeleinheit (3) unter Verwendung einer Rohr-Extrusionsdüse, um den inneren Mantel (5) auszubilden, Einstellen der Fadenspannung der Bündeleinheit (3) und Steuern der Überlänge der Fasereinheiten (2), so dass sie -0.2 % bis 0 beträgt; wobei während der Extrusion eine Aramidfaser direkt auf der Innenseite des inneren Mantels (5) eingebettet wird, um die innere Verstärkungsschicht (4) auszubilden, und die mindestens drei nichtmetallischen Verstärkungselemente der inneren Schicht (6) mit der Beschichtungsschicht (10) in den inneren Mantel (5) eingesetzt werden; und
(S3) Ausbilden eines äußeren Mantels (8): Extrudieren einer Schicht aus flammhemmendem LSZH-Polyolefinmaterial außerhalb des inneren Mantels (5) unter Verwendung einer Rohr-Extrusionsdüse, um den äußeren Mantel (8) auszubilden, wobei während der Extrusion eine Aramidfaser direkt auf der Innenseite des äußeren Mantels (8) eingebettet wird, um die äußere Verstärkungsschicht (7) auszubilden, und die mindestens drei nichtmetallischen Verstärkungselemente der äußeren Schicht (9) mit der Beschichtungsschicht (10) in den äußeren Mantel (8) eingefügt werden, und wobei ein einstellungsfreier Exzenter verwendet wird, um die Positionen der nichtmetallischen Verstärkungselemente der äußeren Schicht (9) zu fixieren, so dass die nichtmetallischen Verstärkungselemente der äußeren Schicht (9) auf den Verlängerungslinien der Verbindungslinien zwischen der Bündeleinheit (3) und den nichtmetallischen Verstärkungselementen der inneren Schicht (6) angeordnet sind.

7. Verfahren zum Herstellen eines hoch- und tieftemperaturbeständigen Glasfaserfernkabels gemäß Anspruch 6, wobei in dem Schritt (S1) die Fasereinheit (2) eine farbige Faser ist, die durch Färben einer nackten Faser erhalten wird, oder eine eng gepufferte Faser ist, die durch Extrudieren einer nackten Faser erhalten wird.

## Revendications

1. Câble optique distant résistant aux hautes et basses températures, comprenant une âme de câble (1), une couche de renforcement interne (4), une gaine interne (5), une couche de renforcement externe (7) et une gaine externe (8) qui recouvrent séquentiellement l'âme de câble (1), dans lequel au moins trois éléments de renforcement non métalliques de la couche interne (6) sont insérés dans la gaine interne (5), les éléments de renforcement non métalliques de la couche interne (6) sont uniformément répartis dans la gaine interne (5) dans la direction circonférentielle, le même nombre d'éléments de renforcement non métalliques de la couche externe (9) que les éléments de renforcement non métalliques de la couche interne (6) sont insérés dans la gaine externe (8),
dans lequel des couches de revêtement (10) sont disposées sur les surfaces extérieures des éléments de renforcement non métalliques de la couche interne (6) et des éléments de renforcement non métalliques de la couche externe (9), et
dans lequel l'âme de câble (1) est une unité de faisceau (3) formée par l'application d'un revêtement de faisceau sur une pluralité d'unités de fibres (2),
dans lequel
les éléments de renforcement non métalliques de la couche externe (9) sont disposés sur des lignes d'extension de lignes de connexion entre l'âme de câble (1) et les éléments de renforcement non métalliques de la couche interne (6),
la gaine interne (5) et la gaine externe (8) sont toutes deux constituées d'un matériau de gaine ignifuge à faible dégagement de fumée et sans halogène (LSZH), et
les unités de fibres (2) ont une longueur excédentaire de -0,2 % à 0.

2. Le câble optique distant résistant aux hautes et basses températures selon la revendication 1, dans lequel le revêtement du faisceau est effectué sur 2 à 24 unités de fibres (2).

3. Le câble optique distant résistant aux hautes et basses températures selon l'une des revendications 1 à 2, dans lequel l'unité de fibre (2) est une fibre colorée ou une fibre à tampon serré.

4. Le câble optique distant résistant aux hautes et basses températures selon l'une des revendications 1 à 3, dans lequel la couche de renforcement interne (4) et la couche de renforcement externe (7) sont toutes les deux formées par l'enfouissement direct d'une pluralité de fibres aramides.

5. Câble optique distant résistant aux hautes et basses températures selon l'une des revendications 1 à 4, dans lequel la gaine externe (8) est extrudée en tube pour couvrir un côté extérieur de la gaine interne (5), et un espace est prévu entre la gaine externe (8) et la gaine interne (5), dans lequel l'espace est rempli par la couche de renforcement externe (7).

6. Procédé de fabrication d'un câble optique distant résistant aux hautes et basses températures selon l'une quelconque des revendications 1 à 5, comprenant les étapes suivantes :
(S1) regroupement de fibres optiques : application de résine de regroupement à l'extérieur de la pluralité d'unités de fibres (2) pour lier la pluralité d'unités de fibres (2) dans l'unité de faisceau (3) ;
(S2) Formation de la gaine interne (5) : extrusion d'une couche de matériau polyoléfine ignifuge à faible teneur en fumée et sans halogène (LSZH) à l'extérieur de l'unité de faisceau (3) à l'aide d'une filière d'extrusion tubulaire pour former la gaine interne (5), en ajustant la tension d'enfilage de l'unité de faisceau (3) et en contrôlant la longueur excédentaire des unités de fibres (2) pour qu'elle soit comprise entre -0.2 % à 0 ; dans lequel, pendant l'extrusion, une fibre aramide est directement enfouie sur le côté intérieur de la gaine interne (5) pour former la couche de renforcement interne (4), et les au moins trois éléments de renforcement non métalliques de la couche interne (6) avec la couche de revêtement (10) sont insérés à l'intérieur de la gaine interne (5) ; et
(S3) Formation de la gaine externe (8) : extrusion d'une couche de matériau polyoléfine ignifuge LSZH à l'extérieur de la gaine interne (5) à l'aide d'une filière d'extrusion tubulaire pour former la gaine externe (8), dans laquelle, pendant l'extrusion, une fibre aramide est directement enfouie sur le côté intérieur de la gaine externe (8) pour former la couche de renforcement externe (7), et les au moins trois éléments de renforcement non métalliques de la couche externe (9) avec la couche de revêtement (10) sont insérés à l'intérieur de la gaine externe (8), et dans lequel une matrice excentrique sans réglage est utilisée pour fixer les positions des éléments de renforcement non métalliques de la couche externe (9), de sorte que les éléments de renforcement non métalliques de la couche externe (9) soient disposés sur les lignes d'extension de lignes de connexion entre l'unité de faisceau (3) et les éléments de renforcement non métalliques de la couche interne (6).

7. Procédé de fabrication d'un câble optique distant résistant aux hautes et basses températures selon la revendication 6, dans lequel, à l'étape (S1), l'unité de fibre (2) est une fibre colorée obtenue par coloration d'une fibre nue ou une fibre à tampon serré obtenue par extrusion d'une fibre nue.
